# FASCICULE DE BREVET EUROPEEN

(11) **EP 1 535 756 B1**
(45) Date de publication et mention de la délivrance du brevet: **20.02.2008**
(21) Numéro de dépôt: 04292680.8
(22) Date de dépôt: 12.11.2004
(51) Int. Cl.: B60B 33/02

(54) **Roulette pour meuble ou analogue**
Lenkrolle für Möbel oder dergleichen
Castor for furniture or similar

(30) Priorité: 21.11.2003 FR 0313623
(43) Date de publication de la demande: 01.06.2005
(73) Titulaire: Bruandet S.A., 39700 La Barre (FR)
(72) Inventeur: Dayt, Patrick, 25000 Besancon (FR)
(74) Mandataire: Flavenot, Bernard

(56) Documents cités:
- EP-A- 0 645 262
- EP-A- 1 110 757
- US-A- 4 821 369
- US-A- 5 355 550
- US-A- 6 092 262
- US-B2- 6 615 448

## Description

La présente invention concerne les roulettes pour meubles ou analogues, qui trouvent une application particulièrement avantageuse pour les sièges comme des fauteuils par exemple de bureau.

Il est connu que de nombreux meubles sont montés sur roulettes pour pouvoir les déplacer facilement. Cependant, dans le cas d'un siège, notamment d'un fauteuil, il est souvent demandé que ce siège puisse être déplacé facilement lorsqu'une personne s'y trouve assise, mais qu'il soit en revanche plus difficile à déplacer lorsqu'il n'est pas occupé.

Pour ce faire, les roulettes destinées à être montées sur les sièges peuvent être munies d'un système de frein qui n'est pas enclenché quand une personne est assise sur le fauteuil, et enclenché quand le fauteuil est vide.

De telles roulettes ont déjà été réalisées, comme celles décrites dans les EP-A-0 645 262 et EP-A-1 110 757. D'une façon générale, une roulette de ce type comporte un corps, des moyens pour relier le corps au meuble, par exemple un pivot, une paroi de palier définie sensiblement dans un premier plan, des moyens pour solidariser la paroi de palier avec le corps, au moins une roue, et avantageusement deux, comportant un premier orifice défini selon un premier axe, un arbre de rotation ayant une section complémentaire de l'orifice et définissant un deuxième axe, des moyens pour monter l'arbre de rotation en coopération avec la paroi de palier, l'arbre étant en outre apte à être enfiché dans l'orifice de façon que les premier et deuxième axes soient confondus pour que la roue soit apte à pivoter autour de ce deuxième axe.

Les roulettes pour meubles ou analogues connues actuellement sur le marché comme celles décrites et illustrées dans les deux documents référencés ci-dessus, donnent satisfaction sur le plan fonctionnel mais présentent l'inconvénient suivant : la complexité de leur structure implique la réalisation d'un nombre d'éléments constitutifs relativement important et un assemblage peu aisé de ces éléments.

La présente invention a donc pour but de réaliser une roulette pour meuble ou analogue, qui pallie en grande partie les inconvénients des roulettes connues de l'art antérieur, notamment l'inconvénient mentionné ci-dessus.

Plus précisément, la présente invention a pour objet une roulette pour meuble ou analogue, comportant :
un corps,
des moyens pour relier ledit corps au meuble,
une paroi de palier définie sensiblement dans un premier plan,
des moyens pour solidariser la paroi de palier avec le corps,
au moins une roue comportant un orifice défini selon un premier axe,
un arbre de rotation ayant une section complémentaire de l'orifice, ledit arbre de rotation définissant un deuxième axe, et
des moyens pour monter ledit arbre de rotation en coopération avec ladite paroi de palier, ledit arbre de rotation étant en outre apte à être enfiché dans ledit orifice de façon que les deux premiers et deuxième axes soient confondus pour que la roue soit apte à pivoter autour du deuxième axe,
caractérisée par le fait que la paroi de palier est constituée par :
- une première partie de paroi de palier, ladite première partie de paroi de palier d'une forme générale en diapason définissant une rainure bordée par deux branches solidaires d'une semelle définissant le fond de ladite rainure, les deux dites branches étant situées dans des plans sensiblement parallèles au premier plan,
- une seconde partie de paroi de palier comportant une embase, et un tenon solidaire de ladite embase, ce dit tenon ayant une forme sensiblement au moins partiellement complémentaire de la rainure de façon qu'il puisse s'enficher dans ladite rainure, et
- des moyens pour lier les deux dites première et seconde parties de paroi de palier quand le tenon est enfiché dans la rainure,
- lesdits moyens pour solidariser la paroi de palier avec ledit corps étant constitués par des moyens pour solidariser ladite première partie de paroi de palier avec ledit corps, et
- lesdits moyens pour monter ledit arbre de rotation en coopération avec la paroi de palier étant constitués par :
   - au moins une première percée oblongue réalisée dans l'une première des deux branches et centrée sur un troisième axe sensiblement perpendiculaire au premier plan, et
   - une troisième percée oblongue réalisée dans ledit tenon,
   - lesdites deux première et troisième percées oblongues ayant une section transversale sensiblement égale à la section dudit arbre de rotation et une section longitudinale supérieure à la section de ce même dit arbre, et étant agencées respectivement dans l'une des deux dites branches et dans ledit tenon de façon qu'elles soient toutes les deux centrées sur ledit troisième axe lorsque le tenon est enfiché dans la rainure, l'arbre de rotation pouvant ainsi traverser de part en part la paroi de palier de façon que le deuxième axe soit sensiblement parallèle audit troisième axe et qu'il puisse être enfiché par une de ses extrémités dans l'orifice de la roue.

Selon une autre caractéristique de l'invention, la roulette comporte en outre une deuxième percée oblongue réalisée dans la seconde branche et de façon sensiblement symétrique de la première par rapport au premier plan.

D'autres caractéristiques et avantages de l'invention apparaîtront au cours de la description suivante donnée en regard des dessins annexés à titre illustratif mais nullement limitatif, dans lesquels :
La figure 1 représente, sous forme schématique, une vue en coupe d'un mode de réalisation d'une partie de la roulette selon l'invention permettant de bien faire ressortir les caractéristiques essentielles de l'invention, la roulette étant représentée lorsqu'elle est sous charge maximum,
La figure 2 représente une vue en perspective et en éclaté, ou dans un état dans lequel ses éléments constitutifs ne sont pas assemblés, d'un mode de réalisation préféré de la roulette selon l'invention, et
La figure 3 représente une vue en perspective du mode de réalisation de la roulette selon la figure 2 dans laquelle a été enlevée une roue pour mieux faire ressortir la structure de cette roulette lorsque ses éléments constitutifs ont été assemblés.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est aussi précisé que les figures représentent essentiellement un seul mode de réalisation de l'objet selon l'invention, mais qu'il peut exister d'autres modes de réalisation qui répondent à la définition de cette invention.

Il est en outre précisé que, lorsque, selon la définition de l'invention, l'objet de l'invention comporte "au moins un" élément ayant une fonction donnée, le mode de réalisation décrit peut comporter plusieurs de ces éléments. Réciproquement, si les modes de réalisation de l'objet selon l'invention tel qu'illustrés comportent plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

Il est enfin précisé que lorsque, dans la présente description, une expression définit à elle seule, sans mention particulière spécifique la concernant, un ensemble de caractéristiques structurelles, [par exemple Σ = Σ(α, τ, γ, ...)], ces caractéristiques peuvent être prises, pour la définition de l'objet de la protection demandée, quand cela est techniquement possible, soit séparément, [par exemple α, et/ou τ, et/ou γ, ...], soit en combinaison totale et/ou partielle, [par exemple Σ(α, τ ,γ), et/ou Σ(α, τ), et/ou Σ(τ ,y), et/ou Σ(α,γ)].

La présente invention concerne, par référence aux trois figures numérotées 1 à 3, une roulette pour meuble ou analogue.

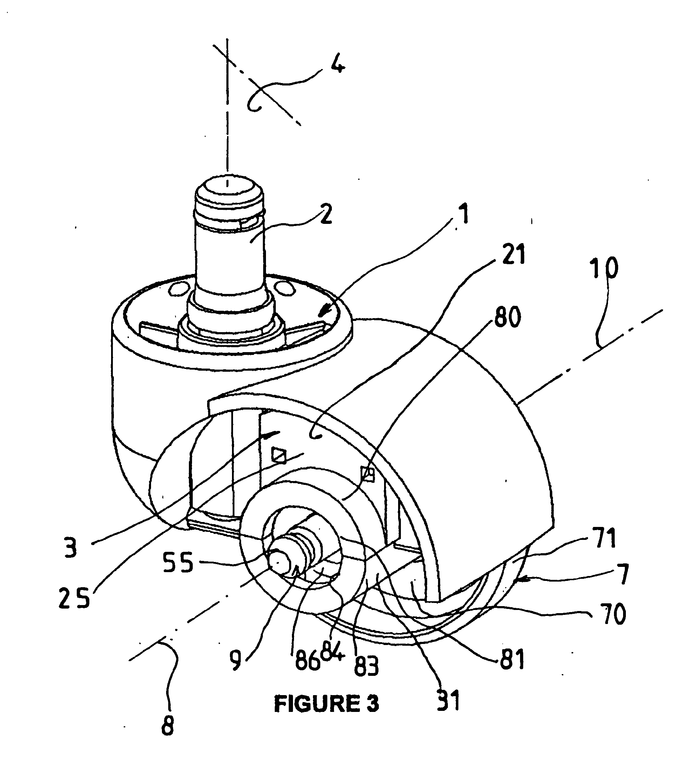

Cette roulette comporte un corps 1 dont la forme en elle-même est bien connu dans le domaine, des moyens 2 pour relier le corps au meuble, par exemple un pivot comme illustré plus particulièrement sur la figure 3, ou tout autre moyen de fixation amovible ou non.

Elle comporte aussi une paroi de palier 3 définie sensiblement dans un premier plan 4 qui passe avantageusement par l'axe du pivot, des moyens 5 pour solidariser la paroi de palier 3 avec le corps 1, et au moins une roue 6, 7, en fait de préférence deux comme dans le mode de réalisation illustré pour obtenir une meilleure stabilité de roulement. De façon classique, chaque roue comporte un orifice 12 défini selon un premier axe 8.

La roulette comporte aussi un arbre de rotation 9, généralement en métal ou analogue, ayant une section complémentaire de l'orifice 12, cet arbre de rotation 9 définissant un deuxième axe 10, et des moyens 11 pour monter l'arbre de rotation 9 en coopération avec la paroi de palier 3. Cet arbre de rotation 9 est en outre apte à être enfiché, de préférence en force, dans l'orifice 12 de chaque roue 6, 7 de façon que les premier et deuxième axes 8, 10 soient confondus pour que la ou les roues 6, 7 soient aptes à pivoter autour de ce deuxième axe 10.

Selon une caractéristique importante de l'invention, la paroi de palier 3 est constituée par une première partie de paroi de palier 21 en forme générale de diapason, définissant une rainure 22 bordée par deux branches 23, 24 solidaires d'une semelle 25 définissant le fond 26 de la rainure 22, les deux branches étant situées dans des plans sensiblement parallèles au premier plan 4, et une seconde partie de paroi de palier 31 comportant une embase 32 et un tenon 33 solidaire de l'embase 32, ce tenon ayant une forme sensiblement au moins partiellement complémentaire de la rainure 22 de façon qu'il puisse s'enficher dans cette rainure.

Elle comporte aussi des moyens 40 pour lier les première et seconde parties de paroi de palier 21, 31 quand le tenon 33 est enfiché dans la rainure 22. Un exemple de réalisation préféré de ces moyens 40 sera décrit ci-après.

Quant aux moyens 5 pour solidariser la paroi de palier 3 avec le corps 1, ils sont constitués par des moyens pour solidariser la première partie de paroi de palier 21 avec le corps. Dans les réalisations industrielles pratiques, ces moyens 5 sont en fait constitués par le fait que le corps 1 et la première partie de paroi de palier 21 sont réalisés d'une seule pièce, par exemple par moulage d'une matière plastique ou analogue.

En outre, selon une caractéristique de l'invention, les moyens 11 définis ci-dessus pour monter l'arbre de rotation 9 en coopération avec la paroi de palier 3 sont constitués par au moins une première percée oblongue réalisée dans une branche de la première partie de paroi de palier 21, et très avantageusement deux première et deuxième percées oblongues 51, 52, comme illustré sur les figures, réalisées respectivement dans les deux branches 23, 24, et une troisième percée oblongue 54 réalisée dans le tenon 33.

Les trois percées oblongues 51, 52, 54 ont une section transversale sensiblement égale ou très légèrement supérieure à la section de l'arbre de rotation 9 et une section longitudinale supérieure à la section de ce même arbre. La longueur de la section longitudinale de ces trois percées sera définie ci-après. En outre, elles sont agencées respectivement dans les deux branches 23, 24 et dans le tenon 33 de façon qu'elles soient toutes les trois centrées sur un troisième axe 53 sensiblement perpendiculaire au premier plan 4, lorsque le tenon 33 est enfiché dans la rainure 22, l'arbre de rotation pouvant ainsi traverser de part en part la paroi de palier 3 de façon que le deuxième axe 10 soit sensiblement parallèle au troisième axe 53 et qu'il puisse être enfiché par une 55 de ses extrémités 55, 56 dans l'orifice 12 d'au moins l'une des deux roues. Dans le mode de réalisation préféré illustré, l'arbre de rotation est enfiché par ses deux extrémités dans les orifices 12 des deux roues 6, 7.

L'arbre de rotation 9 peut ainsi pivoter autour de son axe 10 et se translater perpendiculairement à cet axe en décrivant toute la partie de longueur de la section longitudinale commune au trois percées, dans le but qui sera stipulé ci-après.

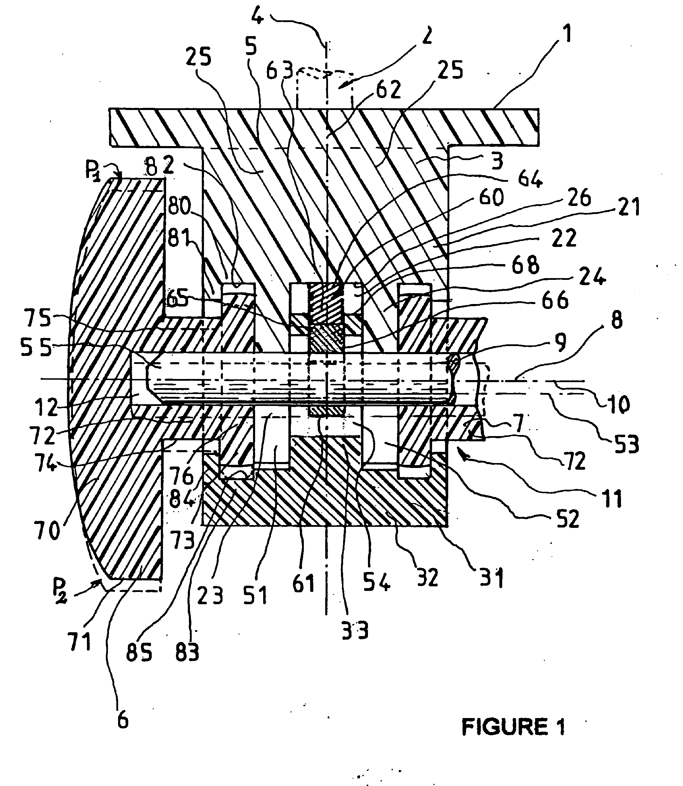

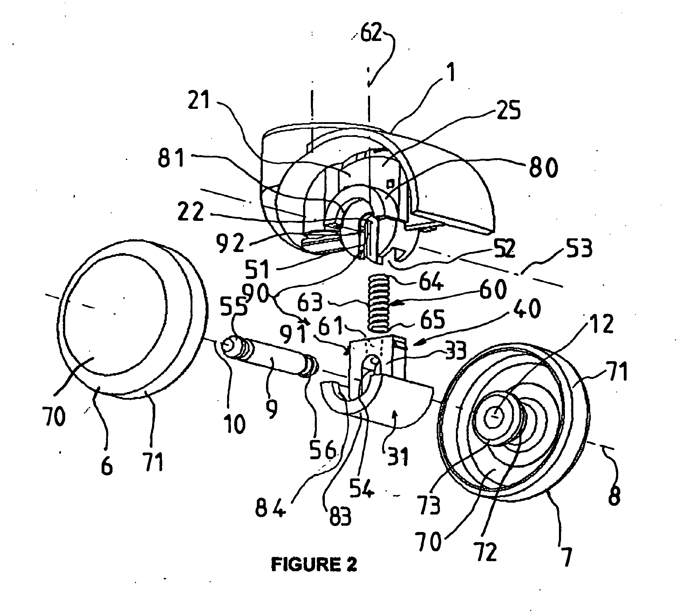

Selon une autre caractéristique de l'invention, la roulette comporte en outre des moyens 60 pour exercer une force de poussée élastique entre la première partie de paroi de palier 21 et l'arbre de rotation 9. Ces moyens 60 comportent avantageusement une quatrième percée 61 réalisée dans le tenon 33, entre la face 68 du tenon tournée vers le fond 26 de la rainure 22 et la troisième percée 54, cette quatrième percée 61 étant réalisée suivant un quatrième axe 62 sensiblement perpendiculaire au troisième axe 53, et un ressort 63 représenté schématiquement sur la figure 1 et en perspective sur la figure 2.

Le ressort 63 est disposé dans la quatrième percée 61 suivant le quatrième axe 62, de façon qu'une première 64 de ses extrémités 64, 65 coopère avec le fond 26 de la rainure 22 et que son autre seconde extrémité 65 coopère par friction avec la portion de la paroi latérale de l'arbre de rotation 9 se trouvant dans la troisième percée 54.

De façon préférentielle, pour éviter une usure trop rapide de la seconde extrémité 65 du ressort et de la paroi de l'arbre de rotation 9, la seconde extrémité 65 du ressort 63 coopère par friction avec la portion de la paroi latérale de l'arbre de rotation 9 au moyen d'un patin de friction 66 monté coulissant dans la quatrième percée 61 et interposé entre cette seconde extrémité et la paroi latérale de l'arbre de rotation 9.

Un tel patin peut par exemple être constitué par un embout interposé entre le ressort 63 et l'arbre de rotation 9. Mais, avantageusement, comme schématiquement illustré en coupe sur la figure 1, il peut être constitué par une bague ou analogue comportant une percée centrale d'une section complémentaire de celle de l'arbre de rotation qui passe à travers cette bague.

Ce patin peut présenter, outre l'avantage mentionné ci-dessus, celui de jouer le rôle de répartiteur d'un lubrifiant, comme de la graisse ou analogue, introduit dans la rainure 22 dans le but qui sera explicité ci-après dans la description du montage et du fonctionnement de la roulette, bien qu'un tel lubrifiant puisse n'être mis que dans les orifices 12 des roues 6, 7.

En fait, le choix d'utiliser ou non un lubrifiant et de l'introduire dans l'un ou l'autre des éléments mentionnés ci-dessus est du domaine de l'homme du métier.

La description de la roulette faite ci-dessus se réfère essentiellement à une roulette comportant au moins une roue, telle la roue 6. Mais il est bien évident que cette description doit aussi se comprendre pour une roulette à deux roues 6, 7 comme illustré. En effet, la roulette présentant une symétrie par rapport au plan 4, la description d'une roulette à deux roues n'est spécifiquement pas nécessaire et se déduit automatiquement de la description faite ci-dessus.

De façon connue en elle-même, une roue comme les roues 6, 7 comporte, comme schématiquement illustré sur les figures, un flasque de roue 70 en forme générale de disque sensiblement défini dans un plan perpendiculaire au premier axe 8, une bande de roulement 71 solidaire du bord externe du flasque de roue 70, un manchon 72 solidaire, par une première 75 de ses extrémités 75, 76, du flasque de roue, le manchon étant en saillie sur le flasque de roue et centré sur le premier axe 8. Quant à l'orifice 12, il est réalisé au moins dans le manchon et, selon l'invention, la roue comporte en outre un collet circulaire 73 situé en saillie sur la paroi latérale externe 74 du manchon 72 et sensiblement à la seconde extrémité 76 de ce manchon, dans un plan sensiblement perpendiculaire au premier axe 8.

Dans ce cas, la roulette comporte en outre un premier demi-manchon 80 sensiblement cylindrique de révolution solidaire extérieurement, par une de ses deux extrémités, de la paroi latérale de l'une des deux branches 23, 24 de la première partie de paroi de palier 21, la branche dans laquelle est réalisée une première percée oblongue, par exemple la percée 51 pour la roue 6 en référence au mode de réalisation illustré sur les figures. Ce premier demi-manchon 80 est centré sur le troisième axe 53 et la valeur de son diamètre interne est supérieure à celle du diamètre externe collet circulaire 73.

Elle comporte aussi un premier demi-collet circulaire 81 solidaire de l'autre extrémité du premier demi-manchon 80 et formant saillie sur la paroi latérale interne 82 de ce premier demi-manchon dans un plan sensiblement perpendiculaire au troisième axe 53, la valeur du diamètre du bord interne du premier demi-collet circulaire 81 étant inférieure à celle du diamètre externe du collet circulaire 73 mais bien entendu, supérieur au diamètre du manchon 72.

De plus, selon une caractéristique de l'invention, l'embase 32 est constituée par au moins un second demi-manchon 83 sensiblement cylindrique de révolution solidaire du tenon 33 par l'une de ses extrémités, ce second demi-manchon 83 étant centré sur le troisième axe 53 quand le tenon 33 est totalement enfiché dans la rainure 22, son diamètre interne étant égal à celui du premier demi-manchon 80 et supérieur à celui du collet circulaire 73. En fait ce second demi-manchon 83 est le symétrique du premier demi-manchon 80 défini ci-dessus.

La roulette comporte en outre un second demi-collet circulaire 84 solidaire de l'autre extrémité du second demi-manchon 83 et formant saillie sur la paroi latérale interne 85 de ce second demi-manchon dans un plan sensiblement perpendiculaire au troisième axe 53, la valeur du diamètre du bord interne du second demi-collet circulaire 84 étant inférieure à celle du diamètre externe du collet circulaire 73 mais bien entendu lui aussi, supérieur au diamètre du manchon 72.

De cette façon, lorsque l'arbre de rotation 9 est enfiché dans l'orifice 12 et que le tenon 33 est enfiché totalement et fixement dans la rainure 22, le collet circulaire 73 est entièrement contenu dans le logement cylindrique 86 qui est formé et délimité par les deux demi-collets circulaires 81, 84 au contact l'un de l'autre par leurs extrémités libres, comme illustré sur les figures 1 et 3, la paroi latérale externe de la branche 23, 24 portant le premier demi-manchon 80, et les deux parois latérales internes 82, 85 respectivement des premier et second demi-manchons 80, 83.

De façon préférentielle, les longueurs des sections longitudinales des première, deuxième et troisième percées oblongues 51, 52, 54 sont déterminées de façon que, lorsque le tenon 33 est enfiché dans la rainure 22 et qu'une charge d'intensité supérieure à celle de la force élastique de poussée donnée par le ressort 63 est appliquée sur le corps 1, l'arbre de rotation 9 vienne en butée contre le fond des première et deuxième percées 51, 52 situé le plus proche de la semelle 25 (position **P₁** illustrée en traits continus sur la figure 1), et que, lorsque le tenon 33 est enfiché dans la rainure 22 et qu'une charge d'intensité inférieure à celle de la force élastique de poussée donnée par le ressort 63 est appliquée sur le corps 1, le collet circulaire 73 vienne frotter contre la paroi latérale interne 85 du second demi-manchon 83 (position **P₂** en traits interrompus sur la figure 1).

En outre, pour que le montage de la roulette selon l'invention soit encore plus aisé, il est tout à fait préférable que les première et deuxième percées 51, 52 réalisées respectivement dans les deux branches 23, 24 soient constituées par des percées ouvertes, comme visible plus particulièrement sur la figure 2, débouchant respectivement sur les extrémités des branches les plus éloignées de la semelle 25.

Enfin, comme mentionné auparavant, la roulette comporte des moyens 5 pour lier les première et seconde parties de paroi de palier 21, 31 quand le tenon 33 est enfiché dans la rainure 22. Ces moyens 5 sont avantageusement constitués, comme ceux illustrés sur la figure 2, par au moins un emboîtement 90 comportant un ergot mâle 91 réalisé sur l'un des deux éléments "tenon 33" et "paroi de la rainure 22", et une encoche en creux 92 d'une forme sensiblement complémentaire de celle de l'ergot 91, l'encoche 92 étant réalisée sur l'autre des deux éléments.

Dans le mode de réalisation illustré de la roulette selon l'invention, qui est le mode de réalisation préféré, l'encoche (ou les encoches) 92 est réalisée dans la paroi de la rainure 22, tandis que l'ergot (ou les ergots) 91 est réalisé en saillie sur le tenon 33.

Le montage de la roulette et son fonctionnement sont décrits ci-après :

On suppose que les éléments de la roulette sont initialement séparés les uns des autres comme illustré sur la figure 2.

A partir de cet état, il est tout d'abord procédé à la mise en place de l'arbre de rotation 9 dans la troisième percée oblongue 54 de façon qu'il dépasse de part et d'autre du tenon 33.

Les deux roues 6, 7 sont alors enfichées en force respectivement sur les deux extrémités 55, 56 de l'arbre de rotation 9 et de façon que le collet circulaire 73 de chaque roue vienne se placer, grâce à la longueur de la section longitudinale de la troisième percée 54, entre le demi-collet circulaire 84 et le tenon 33 de la seconde partie de paroi de palier 31.

Ensuite, le ressort 63 est introduit dans la quatrième percée 61, avec ou sans le patin 66, mais avantageusement avec, selon la configuration choisie qui doit être donnée à la roulette.

Ce premier sous-ensemble d'éléments ainsi constitué est présenté en coopération avec le deuxième sous-ensemble qui est en fait avantageusement réalisé d'une seule pièce, et qui comprend le corps 1 et la première partie de paroi de palier 21, de façon que le tenon 33 se trouve en regard de la rainure 22.

Ces deux sous-ensembles sont alors associés en faisant pénétrer le tenon 33 dans la rainure 22 tout en comprimant le ressort 63. Eventuellement, il est prévu d'introduire un lubrifiant, tel que de la graisse ou analogue, dans la rainure et/ou dans la troisième percée 54.

Le tenon est enfoncé dans la rainure 22 jusqu'à ce que les deux ergots 91

viennent se loger respectivement dans les deux encoches 92. Dans ce mouvement, de par la structure des éléments définis ci-avant, les deux demi-collets circulaires 81, 84 se rejoignent par leurs extrémités libres et forment le logement 86 dans lequel se trouve enfermé le collet circulaire 73.

Le tenon 33 et la rainure 22 ayant atteint leur position respective définitive, le montage de la roulette est complètement terminé.

Une telle roulette peut bien entendu être montée de façon connue en elle-même, sur un meuble, par exemple un fauteuil ou analogue, au moyen du pivot 2.

Les paramètres structuraux du ressort 63 sont définis de façon que, lorsqu'une personne n'occupe pas le fauteuil, la force exercée par le ressort soit assez intense pour repousser et éloigner l'arbre de rotation 9 de la semelle 25. Le collet circulaire 73 vient alors frotter contre la paroi latérale interne 85 du second demi-manchon 83, comme représenté en trait interrompus en **P₂** sur la figure 1. De ce fait, si le fauteuil subit un choc involontaire ou non, le frottement du collet circulaire 73 sur la paroi 85 empêche la roue (ou les deux roues 6, 7) de pivoter autour de l'axe 10. La roulette est fortement freinée et le fauteuil ne peut pas subir un déplacement important. Le collet circulaire 73 et la paroi 85 jouent donc le rôle d'un frein empêchant le fauteuil, par exemple, de heurter un objet quelconque au risque de l'endommager ou de se comporter en obstacle dangereux.

En revanche, quand une personne d'un poids normal s'assoit sur un fauteuil muni d'une roulette selon l'invention, le ressort 63 est comprimé jusqu'à ce que l'arbre de rotation 9 vienne buter contre le fond des première et deuxième percées 51, 52 situé le plus proche de la semelle 25 de la roulette. Dans cette situation illustrée en traits continus **P**₁ sur la figure 1, les deux fonds de ces deux percées constituent le palier de rotation pour l'arbre de rotation 9 et, tout en demeurant assise, la personne peut agir sur le fauteuil pour le déplacer à sa guise, les roues 6, 7 pouvant pivoter sur ces fonds qui peuvent même être éventuellement lubrifiés.

En effet comme mentionné auparavant, la rotation de l'arbre 9 peut être favorisé par un lubrifiant comme de la graisse ou analogue placé initialement dans la rainure 22 et/ou la troisième percée 54 et/ou l'orifice de roue 12 et/ou sur la paroi de l'arbre de rotation 9, et réparti sur la paroi de l'arbre éventuellement au moyen notamment du patin 66.

Il faut aussi souligner un autre avantage de la roulette selon l'invention : la graisse qui peut se trouver accidentellement en excès dans la rainure 22 et donc déborder par les deux percées 51 et 52, ne peut en aucune façon tomber sur le sol car elle reste prisonnière dans le fond du logement 86 défini auparavant. Même si la présence d'un lubrifiant dans le fond de ce logement 86 nuit sensiblement à la fonction frein définie ci-dessus, il est évité que des tâches ne se produisent sur le sol, par exemple des bureaux, qui est généralement recouvert de moquette ou analogue.

## Revendications

1. Roulette pour meuble ou analogue, comportant :
un corps (1),
des moyens (2) pour relier ledit corps au meuble,
une paroi de palier (3) définie sensiblement dans un premier plan (4),
des moyens (5) pour solidariser la paroi de palier (3) avec le corps (1),
au moins une roue (6, 7) comportant un orifice (12) défini selon un premier axe (8),
un arbre de rotation (9) ayant une section complémentaire de l'orifice (12), ledit arbre de rotation (9) définissant un deuxième axe (10), et
des moyens (11) pour monter ledit arbre de rotation (9) en coopération avec ladite paroi de palier (3), ledit arbre de rotation (9) étant en outre apte à être enfiché dans ledit orifice (12) de façon que les deux premier et deuxième axes (8, 10) soient confondus pour que la roue (6, 7) soit apte à pivoter autour du deuxième axe (10),
**caractérisée par le fait que** la paroi de palier (3) est constituée par :
- une première partie de paroi de palier (21), ladite première partie de paroi de palier en forme générale de diapason définissant une rainure (22) bordée par deux branches (23, 24) solidaires d'une semelle (25) définissant le fond (26) de ladite rainure (22), les deux dites branches étant situées dans des plans sensiblement parallèles au premier plan (4),
- une seconde partie de paroi de palier (31) comportant une embase (32) et un tenon (33) solidaire de ladite embase (32), ce dit tenon ayant une forme sensiblement au moins partiellement complémentaire de la rainure (22) de façon qu'il puisse s'enficher dans ladite rainure,
- des moyens (40) pour lier les deux dites première et seconde parties de paroi de palier (21, 31) quand le tenon (33) est enfiché dans la rainure (22),
- lesdits moyens (5) pour solidariser la paroi de palier (3) avec ledit corps (1) étant constitués par des moyens pour solidariser la première partie de paroi de palier (21) avec ledit corps (1), et
- lesdits moyens (11) pour monter ledit arbre de rotation (9) en coopération avec la paroi de palier (3) étant constitués par :
• au moins une première percée oblongue (51, 52) réalisée dans l'une première des deux branches (23, 24), et
• une troisième percée oblongue (54) réalisée dans ledit tenon (33),
• lesdites première et troisième percées oblongues (51, 52, 54) ayant une section transversale sensiblement égale à la section dudit arbre de rotation (9) et une section longitudinale supérieure à la section de ce même dit arbre, et étant agencées respectivement dans la première branche (23, 24) et dans le tenon (33) de façon que, lorsque le tenon (33) est enfiché dans la rainure (22), elles soient toutes les deux centrées sur un troisième axe (53) sensiblement perpendiculaire au premier plan (4), l'arbre de rotation pouvant ainsi traverser de part en part la paroi de palier (3) de façon que le deuxième axe (10) soit sensiblement parallèle au troisième axe (53) et qu'il puisse être enfiché par une (55) de ses extrémités (55, 56) dans l'orifice (12) de la roue (6, 7).

2. Roulette selon la revendication 1, **caractérisée par le fait qu**'elle comporte en outre une seconde percée oblongue (51, 52) réalisée dans la seconde branche (23, 24) et de façon sensiblement symétrique de la première percée oblongue par rapport audit premier plan (4).

3. Roulette selon l'une des revendications 1 et 2, **caractérisée par le fait qu'**elle comporte des moyens (60) pour exercer une force de poussée élastique entre la première partie de paroi de palier (21) et l'arbre de rotation (9).

4. Roulette selon la revendication 3, **caractérisée par le fait que** les moyens (60) pour exercer une force de poussée élastique entre la première partie de paroi de palier et l'arbre de rotation comportent :
* une quatrième percée (61) réalisée dans le tenon (33), entre la face (68) du tenon tournée vers le fond (26) de la rainure (22) et la troisième percée (54), ladite quatrième percée (61) étant réalisée suivant un quatrième axe (62) sensiblement perpendiculaire au troisième axe (53), et
* un ressort (63) disposé dans la quatrième percée (61), une première (64) de ses extrémités (64, 65) coopérant avec le fond (26) de la rainure (22) et sa seconde extrémité (65) coopérant par friction avec la portion de la paroi latérale de l'arbre de rotation (9) se trouvant dans la troisième percée (54) et sur le quatrième axe (62).

5. Roulette selon la revendication 4, **caractérisée par le fait que** la seconde extrémité (65) du ressort (63) coopère par friction avec la portion de la paroi latérale de l'arbre de rotation se trouvant dans la troisième percée, au moyen d'un patin de friction (66) monté coulissant dans la quatrième percée (61) et interposé entre cette dite seconde extrémité du ressort (63) et la portion de paroi latérale de l'arbre de rotation (9) se trouvant dans la troisième percée (54).

6. Roulette selon la revendication 5, **caractérisée par le fait que** ledit patin (66) est constitué par au moins l'un des éléments suivants : un embout, une bague comportant une percée centrale d'une section complémentaire de celle de l'arbre de rotation qui passe à travers cette bague.

7. Roulette selon l'une des revendications 1 à 6, **caractérisée par le fait que** la roue (6, 7) comporte un flasque de roue (70) en forme générale de disque sensiblement défini dans un plan perpendiculaire au premier axe (8), une bande de roulement (71) solidaire du bord externe du dit flasque de roue (70), un manchon (72) solidaire, par une première (75) de ses extrémités (75, 76), du dit flasque de roue, ledit manchon étant en saillie sur ledit flasque de roue et centré sur le premier axe (8), ledit orifice (12) étant réalisé au moins dans ledit manchon, et un collet circulaire (73) situé en saillie sur la paroi latérale externe (74) dudit manchon (72) et sensiblement à la seconde extrémité (76) dudit manchon, dans un plan sensiblement perpendiculaire au premier axe (8).

8. Roulette selon la revendication 7, **caractérisée par le fait qu'**elle comporte en outre un premier demi-manchon (80) sensiblement cylindrique de révolution solidaire extérieurement, par une de ses deux extrémités, de la paroi latérale de l'une des deux branches (23, 24) de la première partie de paroi de palier (21), ledit premier demi-manchon (80) étant centré sur le troisième axe (53) et son diamètre interne ayant une valeur supérieure à celle du diamètre externe du collet circulaire (73), et un premier demi-collet circulaire (81) solidaire de l'autre extrémité du premier demi-manchon (80) et formant saillie sur la paroi latérale interne (82) de ce premier demi-manchon dans un plan sensiblement perpendiculaire au troisième axe (53), la valeur du diamètre du bord interne du premier demi-collet circulaire (81) étant inférieure à celle du diamètre externe du collet circulaire (73), et que ladite embase (32) est constituée par au moins un second demi-manchon (83) sensiblement cylindrique de révolution solidaire dudit tenon (33) par l'une de ses extrémités, ce dit second demi-manchon (83) étant centré sur le troisième axe (53) quand le tenon (33) est enfiché dans la rainure (22), son diamètre interne étant égal à celui du premier demi-manchon (80) et supérieur à celui du collet circulaire (73), un second demi-collet circulaire (84) solidaire de l'autre extrémité du second demi-manchon (83) et formant saillie sur la paroi latérale interne (85) de ce second demi-manchon dans un plan sensiblement perpendiculaire au troisième axe (53), la valeur du diamètre du bord interne du second demi-collet circulaire (84) étant inférieure à celle du diamètre externe du collet circulaire (73), de façon que, lorsque l'arbre de rotation (9) est enfiché dans l'orifice (12) et que le tenon (33) est enfiché totalement et fixement dans la rainure (22), ledit collet circulaire (73) soit situé dans le logement cylindrique (86) formé et délimité par les deux demi-collets circulaires (81, 84) au contact l'un de l'autre par leurs extrémités libres, la paroi latérale externe de la branche (23, 24) portant le premier demi-manchon (80) et les deux parois latérales internes (82, 85) respectivement des premier et second demi-manchons (80, 83).

9. Roulette selon les revendications 2 et 8, **caractérisée par le fait que** les longueurs des sections longitudinales des trois première, deuxième et troisième percées oblongues (51, 52, 54) sont déterminées de façon que, lorsqu'une charge d'intensité supérieure à celle de la force élastique de poussée est appliquée sur ledit corps (1), l'arbre de rotation (9) vienne en butée contre le fond des deux première et deuxième percées (51, 52) situé le plus proche de la semelle (25), et que, lorsqu'une charge d'intensité inférieure à celle de la force élastique de poussée est appliquée sur ledit corps (1), le collet circulaire (73) vienne en butée contre la paroi latérale interne (85) du second demi-manchon (83).

10. Roulette selon l'une des revendications 2 à 9, **caractérisée par le fait que** les première et deuxième percées (51, 52) réalisées respectivement dans les deux branches (23, 24) sont constituées par des percées ouvertes débouchant respectivement sur les extrémités des branches les plus éloignées de la semelle (25).

11. Roulette selon l'une des revendications 1 à 10, **caractérisée par le fait que** les moyens (5) pour lier les première et seconde parties de paroi de palier (21, 31) quand le tenon (33) est enfiché dans la rainure (22), sont constitués par au moins un emboîtement (90) comportant un ergot mâle (91) réalisé sur l'un des deux éléments "tenon (33)" et "paroi de la rainure (22)", et une encoche en creux (92) d'une forme sensiblement complémentaire de celle du dit ergot (91), ladite encoche (92) étant réalisée sur l'autre des deux éléments.

## Claims

1. A castor for furniture or the like, the castor comprising:
· a body (1);
· means (2) for connecting said body to furniture;
· a rotary bearing wall (3) defined substantially in a first plane (4);
· means (5) for securing the bearing wall (3) to the body (1);
· at least one wheel (6,7) including an orifice (12) defined on a first axis (8);
· a rotary shaft (9) of section complementary to the orifice (12), said rotary shaft (9) defining a second axis (10); and
· means (11) for mounting said rotary shaft (9) in co-operation with said first bearing wall (3), said rotary shaft (9) also being suitable for being engaged in said orifice (12) in such a manner that the first and second axes (8, 10) coincide to enable the wheel (6, 7) to pivot about the second axis (10);
wherein the bearing wall (2) is constituted by:
· a first bearing wall portion (21), said first bearing wall portion being generally in the form of a tuning-fork defining a slot (22) between two limbs (23, 24) secured to a slab (25) defining the end (26) of said slot (22), said two limbs being situated in planes that are substantially parallel to the first plane (4);
· a second bearing wall portion (31) comprising a base (32) and a tenon (33) secured to said base (32), said tenon being of a shape that its substantially complementary, at least in part, to the slot (22) so as to enable it to be engaged in said slot;
· means (40) for uniting said first and second bearing wall portions (21, 31)when the tenon (33) is engaged in the slot (22);
· said means (5) for securing the bearing wall (3) to the body (1) being constituted by means for securing the first wall portion (21) with said body; and
· said means (11) for mounting said rotary shaft (9) to co-operate with the bearing wall (3) being constituted by:
· at least a first oblong hole (51, 52) made in one of the first and second limbs (23, 24); and
· a third oblong hole (54) made in said tenon (33);
· said first and third oblong holes (51, 52, 54) being of cross-section substantially equal to the section of said rotary shaft (9) and of longitudinal section greater than the section of said shaft, and being arranged respectively in the first limb (23, 24) and in the tenon (33) in such a manner that when the tenon (33) is engaged in the slot (22), they are both centered on a third axis (53) substantially perpendicular to the first plane (4), the rotary shaft thus being capable of passing right through the bearing wall (3) so that the second axis (10) is substantially parallel to the third axis (53) and can have one (55) of its ends (55, 56) engaged in the orifice (12) of the wheel (6, 7).

2. A castor according to claim 1, further including a second oblong hole (51, 52) made in the second limb (23, 24) in a manner that is substantially symmetrical to the first oblong hole about said first plane (4).

3. A castor according to any one of the claims 1 and 2, including means (60) for exerting a resilient thrust force between the first bearing wall portion (21) and the rotary shaft (9).

4. A castor according to claim 3, wherein the means (60) for exerting a first resilient force between the first bearing wall portion and the rotary shaft comprise:
· a fourth hole (61) formed in the tenon between the face (68) of the tenon (33) facing towards the end (26) of the slot (22) and the third hole (54), said fourth hole (61) extending along a fourth axis (62) that is substantially perpendicular to the third axis (53); and
· a spring (63) disposed in the fourth hole (61), a first (64) of the ends (64, 65) of the spring co-operating with the end (26) of the slot (22), and the second end (65) of the spring co-operating in friction with the portion of the side wall of the rotary shaft (9) that lies in the third hole (54) and on the fourth axis (62).

5. A castor according to claim 4, wherein the second end (65) of the spring (63) co-operates in friction with the portion of the side wall of the rotary shaft that is located in the third hole by means of a friction shoe (66) mounted to slide in the fourth hole (61) and interposed between said second end of the spring (63) and the material of the side wall of the rotary shaft (9) that is located in the third hole (54).

6. A castor according to claim 5, wherein said shoe (66) is constituted by at least one of the following elements: an endpiece; and a ring having a central hole of section complementary to the section of the rotary shaft, which shaft passes through the ring.

7. A castor according to any one of the claims 1 to 6, wherein the wheel (6, 7) comprises a wheel web (70) of generally disk shape substantially defined in a plane perpendicular to the first axis (8), a tread (71) secured to the outer edge of said wheel web (70), a sleeve (72) having a first one (75) of its ends (75, 76) secured to said wheel web, said sleeve projecting from said wheel web and being centered on the first axis (8), said orifice (12) being formed at least in said sleeve, and a circular collar (73) projecting from the outside wall (74) of said sleeve (72) substantially at the second end (76) of said sleeve, in a plane that is substantially perpendicular to the first axis (8).

8. A castor according to claim 7, further comprising a first substantially circularly cylindrical half-sleeve (80) secured on the outside via one of its two ends to the side wall of one of the two limbs (23, 24) of the first bearing wall portion (21), said first half-sleeve (80) being centered on the third axis (53) and its inside diameter being greater than the outside diameter of the circular collar (73), and a first circular half-collar (81) secured to the other end of the first half-sleeve (80) and projecting from the inside wall (82) of said first half-sleeve in a plane substantially perpendicular to the third axis (53), the diameter of the inside edge of the first circular half-collar (81) being less than the outside diameter of the circular collar (73), and by the fact that said base (32) is constituted by at least one second substantially circular cylindrical half-sleeve (83) secured to said tenon (33) via one of its ends, said second half-sleeve (86) being centered on the third axis (53) when the tenon (33) is engaged in the slot (22), its inside diameter being equal to the diameter of the first half-sleeve (80) and greater than the diameter of the circular collar (73), a second circular half-collar (84) secured to the other end of the second half-sleeve (83) and projecting from the inside wall (85) of said second half-sleeve in a plane that is substantially perpendicular to the third axis (53), the diameter of the inside edge of the second circular half-collar (84) being less than the outside diameter of the circular collar (73), in such a manner that when the rotary shaft (9) is engaged in the orifice (12) and the tenon (33) is engaged fully and securely in the slot (22), said circular collar (73) is situated in the cylindrical housing (86) formed and defined by the two circular half-collars (81, 84) contacting each other via their free ends, with the outside wall of the limb (23, 24) carrying the first half-sleeve (80) and the two inside walls (82, 85) respectively of the first and second half-sleeves (80, 83).

9. A castor according to claims 2 and 8, wherein the lengths of the longitudinal sections of the first, second, and third oblong holes (51, 52, 54) are determined in such a manner that when a load greater than the resilient thrust force is applied to said body (1), the rotary shaft (9) comes into abutment against the ends of the first and second holes (51, 52) situated closest to the slab (25), and when a load less than that of the resilient thrust force is applied to said body (1), the circular collar (73) comes into abutment against the inside wall (85) of the second half-sleeve (83).

10. A castor according any one of the claims 2 to 9, wherein the first and second holes (51, 52) formed respectively in the two limbs (23, 24) are constituted by open holes opening out respectively in the ends of the limbs that are furthest from the slab (25).

11. A castor according any one of the claims 1 to 10, wherein the means (5) for uniting the first and second bearing wall portions (21, 31) when the tenon (33) is engaged in the slot (22, are constituted by at least one engagement (90) between a male bead (91) formed on one of the two elements comprising the "tenon (33)" and "the wall of the slot (22)", and by a recessed catch (92) of shape substantially complementary to the shape of said bead (91), said catch (92) being made in the other one of said two elements.

## Patentansprüche

1. Rolle für ein Möbelstück oder dergleichen mit:
einem Körper (1),
Mitteln (2) zum Verbinden des Körpers mit dem Möbelstück,
einer Lagerwand (3), die im Wesentlichen in einer ersten Ebene (4) definiert ist,
Mitteln (5) zum festen Verbinden der Lagerwand (3) mit dem Körper (1),
mindestens einem Rad (6, 7) mit einer Öffnung (12), die entlang einer ersten Achse (8) definiert ist,
einer Drehwelle (9) mit einem zur Öffnung (12) komplementären Querschnitt, wobei die Drehwelle (9) eine zweite Achse (10) definiert, und
Mitteln (11) zum Montieren der Drehwelle (9) in Zusammenwirkung mit der Lagerwand (3), wobei die Drehwelle (9) außerdem in die Öffnung (12) eingeschoben werden kann, so dass die zwei Achsen, d. h. die erste und die zweite Achse, (8, 10) zusammenfallen, damit sich das Rad (6, 7) um die zweite Achse (10) drehen kann,
**dadurch gekennzeichnet, dass** die Lagerwand (3) gebildet ist aus:
- einem ersten Lagerwandteil (21), wobei der erste Lagerwandteil mit einer allgemeinen Stimmgabelform eine Rille (22) definiert, die von zwei Schenkeln (23, 24) begrenzt ist, welche mit einer Sohle (25) fest verbunden sind, die den Boden (26) der Rille (22) definiert, wobei die zwei Schenkel in zur ersten Ebene (4) im Wesentlichen parallelen Ebenen liegen,
- einem zweiten Lagerwandteil (31) mit einer Fußplatte (32) und einem mit der Fußplatte (32) fest verbundenen Stift (33), wobei dieser Stift eine im Wesentlichen zumindest teilweise zur Rille (22) komplementäre Form aufweist, so dass er sich in die Rille einschieben kann,
- Mitteln (40) zum Verbinden der zwei Lagerwandteile, des ersten und des zweiten Lagerwandteils (21, 31), wenn der Stift (33) in die Rille (22) eingeschoben ist,
- wobei die Mittel (5) zum festen Verbinden der Lagerwand (3) mit dem Körper (1) aus Mitteln zum festen Verbinden des ersten Lagerwandteils (21) mit dem Körper (1) gebildet sind, und
- die Mittel (11) zum Montieren der Drehwelle (9) in Zusammenwirkung mit der Lagerwand (3) gebildet sind aus:
• mindestens einer ersten länglichen Bohrung (51, 52), die in einem ersten der zwei Schenkel (23, 24) hergestellt ist, und
• einer dritten länglichen Bohrung (54), die im Stift (33) hergestellt ist,
• wobei die erste und die dritte längliche Bohrung (51, 52, 54) einen Querschnitt, der im Wesentlichen gleich dem Querschnitt der Drehwelle (9) ist, und einen Längsschnitt, der größer ist als der Schnitt eben dieser Welle, aufweisen, und jeweils im ersten Schenkel (23, 24) und im Stift (33) angeordnet sind, so dass, wenn der Stift (33) in die Rille (22) eingeschoben ist, sie alle beide auf einer dritten Achse (53) zentriert sind, die zur ersten Ebene (4) im Wesentlichen senkrecht ist, wobei die Drehwelle somit die Lagerwand (3) völlig durchqueren kann, so dass die zweite Achse (10) zur dritten Achse (53) im Wesentlichen parallel ist, und sie durch eines (55) ihrer Enden (55, 56) in die Öffnung (12) des Rades (6, 7) eingeschoben werden kann.

2. Rolle nach Anspruch 1, **dadurch gekennzeichnet, dass** sie außerdem eine zweite längliche Bohrung (51, 52) umfasst, die im zweiten Schenkel (23, 24) und in Bezug auf die erste Ebene (4) zur ersten länglichen Bohrung im Wesentlichen symmetrisch hergestellt ist.

3. Rolle nach einem der Ansprüche 1 und 2, **dadurch gekennzeichnet, dass** sie Mittel (60) zum Ausüben einer elastischen Schubkraft zwischen dem ersten Lagerwandteil (21) und der Drehwelle (9) umfasst.

4. Rolle nach Anspruch 3, **dadurch gekennzeichnet, dass** die Mittel (60) zum Ausüben einer elastischen Schubkraft zwischen dem ersten Lagerwandteil und der Drehwelle umfassen:
* eine vierte Bohrung (61), die im Stift (33) hergestellt ist, zwischen der Fläche (68) des Stifts, die zum Boden (26) der Rille (22) gewandt ist, und der dritten Bohrung (54), wobei die vierte Bohrung (61) entlang einer vierten Achse (62), die zur dritten Achse (53) im Wesentlichen senkrecht ist, hergestellt ist, und
* eine Feder (63), die in der vierten Bohrung (61) angeordnet ist, wobei ein erstes (64) ihrer Enden (64, 65) mit dem Boden (26) der Rille (22) zusammenwirkt und ihr zweites Ende (65) durch Reibung mit dem Abschnitt der Seitenwand der Drehwelle (9) zusammenwirkt, der sich in der dritten Bohrung (54) und auf der vierten Achse (62) befindet.

5. Rolle nach Anspruch 4, **dadurch gekennzeichnet, dass** das zweite Ende (65) der Feder (63) durch Reibung mit dem Abschnitt der Seitenwand der Drehwelle, der sich in der dritten Bohrung befindet, mittels eines Reibungsklotzes (66) zusammenwirkt, der gleitend in der vierten Bohrung (61) angeordnet ist und zwischen dieses zweite Ende der Feder (63) und den Abschnitt der Seitenwand der Drehwelle (9), der sich in der dritten Bohrung (54) befindet, eingefügt ist.

6. Rolle nach Anspruch 5, **dadurch gekennzeichnet, dass** der Klotz (66) aus mindestens einem der folgendem Elemente gebildet ist: einem Ansatz, einem Ring mit einer zentralen Bohrung mit einem Querschnitt, der zu jenem der Drehwelle, die durch diesen Ring verläuft, komplementär ist.

7. Rolle nach einem der Ansprüche 1 bis 6, **dadurch gekennzeichnet, dass** das Rad (6, 7) einen Raddeckel (70) mit allgemeiner Scheibenform, der im Wesentlichen in einer zur ersten Achse (8) senkrechten Ebene definiert ist, eine Lauffläche (71), die mit dem äußeren Rand des Raddeckels (70) fest verbunden ist, eine Hülse (72), die durch ein erstes (75) ihrer Enden (75, 76) mit dem Raddeckel fest verbunden ist, wobei die Hülse am Raddeckel vorsteht und auf der ersten Achse (8) zentriert ist, wobei die Öffnung (12) zumindest in der Hülse hergestellt ist, und einen kreisförmigen Kragen (73), der an der äußeren Seitenwand (74) der Hülse (72) vorsteht und im Wesentlichen am zweiten Ende (76) der Hülse in einer zur ersten Achse (8) im Wesentlichen senkrechten Ebene liegt, umfasst.

8. Rolle nach Anspruch 7, **dadurch gekennzeichnet, dass** sie außerdem eine erste Halbhülse (80), die im Wesentlichen rotationssymmetrisch-zylindrisch ist und außen durch eines ihrer zwei Enden mit der Seitenwand von einem der zwei Schenkel (23, 24) des ersten Lagerwandteils (21) fest verbunden ist, wobei die erste Halbhülse (80) auf der dritten Achse (53) zentriert ist und ihr Innendurchmesser einen Wert aufweist, der größer ist als jener des Außendurchmessers des kreisförmigen Kragens (73), und einen ersten kreisförmigen Halbkragen (81) umfasst, der mit dem anderen Ende der ersten Halbhülse (80) fest verbunden ist und an der inneren Seitenwand (82) dieser ersten Halbhülse in einer zur dritten Achse (53) im Wesentlichen senkrechten Ebene vorsteht, wobei der Wert des Durchmessers des inneren Randes des ersten kreisförmigen Halbkragens (81) geringer ist als jener des Außendurchmessers des kreisförmigen Kragens (73), und dass die Fußplatte (32) gebildet ist aus mindestens einer zweiten Halbhülse (83), die im Wesentlichen rotationssymmetrisch-zylindrisch ist und mit dem Stift (33) durch eines seiner Enden fest verbunden ist, wobei die zweite Halbhülse (83) auf der dritten Achse (53) zentriert ist, wenn der Stift (33) in die Rille (22) eingeschoben ist, wobei ihr Innendurchmesser gleich jenem der ersten Halbhülse (80) und größer als jener des kreisförmigen Kragens (73) ist, einem zweiten kreisförmigen Halbkragen (84), der mit dem anderen Ende der zweiten Halbhülse (83) fest verbunden ist und an der inneren Seitenwand (85) dieser zweiten Halbhülse in einer zur dritten Achse (53) im Wesentlichen senkrechten Ebene vorsteht, wobei der Wert des Durchmessers des inneren Randes des zweiten kreisförmigen Halbkragens (84) geringer ist als jener des Außendurchmessers des kreisförmigen Kragens (73), so dass, wenn die Drehwelle (9) in die Öffnung (12) eingeschoben ist und der Stift (33) vollständig und fest in die Rille (22) eingeschoben ist, der kreisförmige Kragen (73) in der zylindrischen Aufnahme (86) liegt, die durch die zwei kreisförmigen Halbkrägen (81, 84), die durch ihre freien Enden miteinander in Kontakt stehen, gebildet und begrenzt ist, wobei die äußere Seitenwand des Schenkels (23, 24) die erste Halbhülse (80) trägt und die zwei inneren Seitenwände (82, 85) die erste bzw. die zweite Halbhülse (80, 83) tragen.

9. Rolle nach den Ansprüchen 2 und 8, **dadurch gekennzeichnet, dass** die Längen der Längsschnitte der drei länglichen Bohrungen, der ersten, der zweiten und der dritten länglichen Bohrung (51, 52, 54) so bestimmt sind, dass, wenn eine Last mit einer Intensität, die größer ist als jene der elastischen Schubkraft, auf den Körper (1) aufgebracht wird, die Drehwelle (9) am Boden der zwei Bohrungen, der ersten und der zweiten Bohrung (51, 52), zur Anlage kommt, der am nächsten zur Sohle (25) liegt, und dass, wenn eine Last mit einer Intensität, die geringer ist als jene der elastischen Schubkraft, auf den Körper (1) aufgebracht wird, der kreisförmige Kragen (73) an der inneren Seitenwand (85) der zweiten Halbhülse (83) zur Anlage kommt.

10. Rolle nach einem der Ansprüche 2 bis 9, **dadurch gekennzeichnet, dass** die erste und die zweite Bohrung (51, 52), die jeweils in den zwei Schenkeln (23, 24) hergestellt sind, aus offenen Bohrungen gebildet sind, die jeweils an den Enden der Schenkel, die am weitesten von der Sohle (25) entfernt sind, münden.

11. Rolle nach einem der Ansprüche 1 bis 10, **dadurch gekennzeichnet, dass** die Mittel (5) zum Verbinden des ersten und des zweiten Lagerwandteils (21, 31), wenn der Stift (33) in die Rille (22) eingeschoben ist, aus mindestens einer Steckverbindung (90) mit einem Steckervorsprung (91), der an einem der zwei Elemente "Stift (33)" und "Wand der Rille (22)" hergestellt ist, und einem vertieften Einschnitt (92) mit einer im Wesentlichen zu jener des Vorsprungs (91) komplementären Form gebildet sind, wobei der Einschnitt (92) am anderen der zwei Elemente hergestellt ist.
